# EUROPEAN PATENT APPLICATION

(11) **EP 0 657 680 A2**
(43) Date of publication of application: **14.06.1995**
(21) Application number: 94308001.0
(22) Date of filing: 31.10.1994
(51) Int. Cl.: F16L 39/00

(54) **Tube coupling block**

(30) Priority: 06.12.1993 US 161631
(71) Applicant: Ford Motor Company, Dearborn, MI 48126 (US)
(72) Inventor: Selm, Gerald Joseph, Connersville, Indiana 47331 (US)
(74) Representative: Messulam, Alec Moses

(57) **Abstract**

A tube coupling block (10) is disclosed for joining a plurality of male tube members (12) to a plurality of female tube members (14). The tube coupling block includes a main body (16) having a plurality of bores (38), each having a seat area (36) of predetermined shape, for receiving the first end (26) of the female tube member (14) therein as well as a generally planar second body (18) releasably secured to the main body and having a plurality of tube receiving slots (42). Each slot is configured to fit over a circumferential upset (22) of the male tube member (12) upon rotation of the second body (18) relative to the main body (16).

## Description

The present invention relates generally to tube connections. More particularly, the present invention relates to a tube coupling apparatus which eliminates the need for welding or soldering or the use of special tools to join a pair of tubes together.

In many automotive, household appliance and machine tool applications, fluid conduits or tubes that carry pressurised fluids must be capable of being disconnected to permit repair or replacement of components of the system. To facilitate initial connection and subsequent disconnection, there have been proposed a myriad of quick-connect fittings or tube coupling devices such as exemplified in U.S. Patent No. 4,055,359, assigned to the assignee of the present invention. The device of the '359 patent is very effective in providing a leak-tight seal between two fluid carrying tubes but requires the use of a special tool to disconnect the tubes when repair or service needs to be done. It would, therefore, be desirable to provide a tube coupling device which provides a leak-tight seal between adjacent tube members and which is economical and simple to use without the need for specialised tooling.

U.S. Patent No. 4,468,054 discloses a flange mounted expansion valve utilising a tube coupling device which includes a flange plate having a pair of tube receiving notches formed on one edge thereof which fit over a pair of tubes. The plate is subsequently secured to the expansion valve by use of a threaded fastener. The fastener and the tube receiving slots prevent the flange plate from rotating relative to the expansion valve and provides a method to connect a pair or tubes to tie expansion valve. However, because the flange plate does not rotate relative to the valve, it is necessary for the tubes to first be inserted into the valve, then the flange plate to be slid over the tubes and subsequently the threaded fastener to be inserted into an aperture and tightened. In a constricted or confined work space, the ability of an operator to manoeuvre independent pieces of the expansion valve as such can be hindered due to the number of component pieces involved. It would, therefore, be desirable to provide a tube coupling device which can be utilised in a preassembled condition to reduce the number of loose components used during the joining of the tube members.

The present invention provides a tube coupling apparatus for joining together a plurality of tube members which comprises a plurality of male tube members, each male tube member having a circumferential upset spaced from a pilot end thereof, a plurality of female tube members having a first end with a circumferential flange there around for receiving the pilot end of the male tube members therein and a plurality of O-rings, each O-ring being interposed between a respective upset of the male tube member and a flange of the female tube member. The tube coupling apparatus further includes a main body having a plurality of bores each having a seat area of predetermined shape for receiving the first end of the female tube members therein, the circumferential flange of the female tube member being configured to contact an exterior surface of the main body at the seat area. The apparatus also includes a generally planar second body releasably secured to the main body and having a plurality of tube receiving slots therein, each slot being configured to fit over the circumferential upset of a respective male tube member upon rotation of the second body relative to the main body, as well as a fastener for securing the second body to the main body. In embodiment of the present invention, the second body is generally S-shaped and the tube receiving slots open on opposite edges thereof.

It is an advantage of the present invention to provide a tube coupling device which is easy and inexpensive to fabricate, which provides a leak-tight seal between adjacent tube members and which can be utilised as a preassembled component to reduce the number of components involved in joining a pair of tubes.

The invention will now be described further, by way of example, with reference to the accompanying drawings, in which:

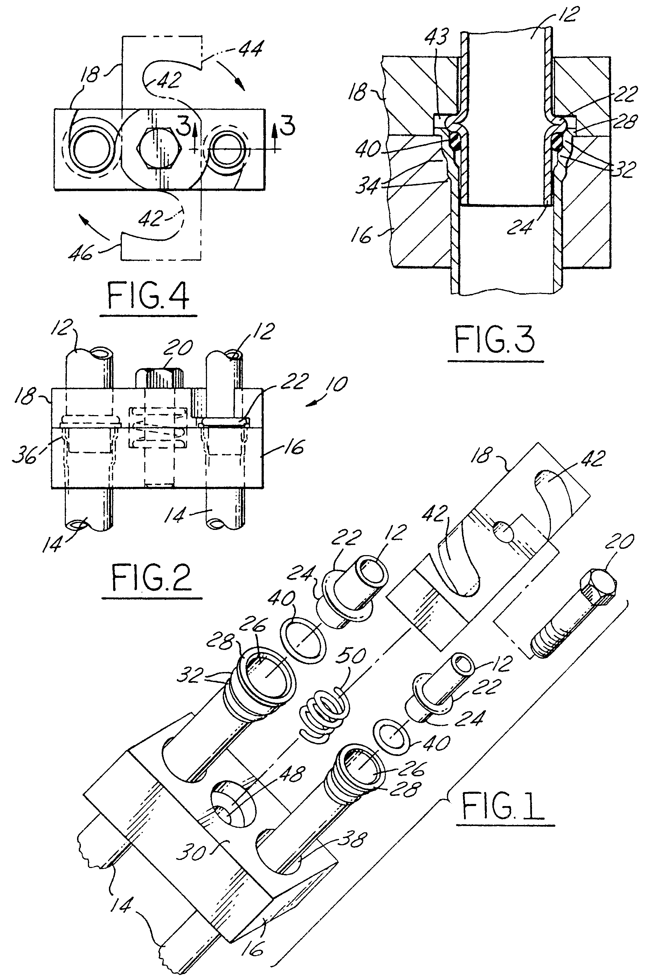

Figure 1 is an exploded, perspective view of the present invention;
Figure 2 is a cross-sectional view of the present invention taken along line 2-2 of Figure 1;
Figure 3 is a cross-sectional view of the present invention taken along line 3-3 of Figure 1; and
Figure 4 is a top plan view of the tube coupling apparatus of the present invention.

Referring now to the drawings, a tube coupling block 10 of the present invention joins together a plurality of male tube members 12 to a plurality of female tube members 14. The block 10 includes a main body 16 and a secondary body such as clamping block 18 releasably and rotatably secured to the main body 16 by a fastener 20. The tube coupling block 10 provides a leak-tight seal between the male tube members 12 and female tube members 14 as will be described below.

Each of the male tube members 12 includes a circumferential upset 22 spaced a predetermined distance from a pilot end 24 thereof. A pilot end 24 projects into a first end 26 of a respective female tube member 14. The first end 26 of each female tube member 14 has a circumferential flange 28 there around which contacts an exterior surface 30 of the main body 16. The first end 26 further includes a pair of stepped portions 32 which engage a respective pair of shoulders 34 in the seat areas 36 of the bore 38 of the main body 16. During assembly, the female tube member 14 is inserted through the seat area 36 such that the stepped portions 32 of the female tube member contact the shoulders 34 in the main body 16. The female tube member is then staked or expanded in the bore 38 such that the circumferential flange 28 rests against the exterior surface 30 of the main body 16. In this manner, the female tube members 14 are secured to the main body 16 without the use of welding or soldering, thus decreasing the cost and complexity of the assembly.

As stated above, the tube coupling block 10 of the present invention also includes a second body, such as clamping block 18. In the preferred embodiment, the clamping block 18 is a generally S-shaped member having a pair of tube slots 42 disposed on opposite edges 44, 46 thereof. Each of the slots 42 includes a counter bore 43 of approximately the same diameter as the circumferential flange 28 of the female tube member. As such, in the assembled conditioned, the flange 28 fits tightly within the counter bore 43 and prevents counter rotation of the clamping block should the clamping block 18 become loosened relative to the main body 16. By disposing the tube slots 42 on opposite edges of the clamping block 18, the clamping block 18 can be rotated to engage the male tube members 12 while the clamping block 18 is secured to the main body 16 in a preassembled condition. This offers an advantage not found in the '054 patent since that patent discloses that its flange plate may not be rotated. The clamping body 18 is releasably and rotatably secured to the main body 16 by the fastener 20 threadably secured into an aperture 48 in the main body 16. Alternatively, a nut can be moulded into the main block 16 to receive the threaded fastener 20 there through. The fastener is configured to tighten into the main body in the same direction as the rotation of the clamping block 18. This prevents the misalignment or loosening of the clamping block during assembly. A spring 50 may be included to provide for quick disengagement of the clamping block 18 from the main body 16 upon loosening of fastener 20.

In operation, the tube coupling block 10 of the present invention is used to assemble a pair of male tube members to a respective pair of female tube members in the following manner. First, the female tube members are staked into the seat areas 36 of the main body 16 as described above. The clamping block 18 is then rotatably secured by means of fastener 20 to the main body 16. The pilot ends 24 of the male tube members are then inserted into the first ends 26, respectively, of the female tube members 14 until the circumferential upset 22 contacts an O-ring 40 disposed on the circumferential flange 28 of the female tube member. In this manner, the O-ring contacts both ends of the tube members to be joined whereas in typical prior art applications, the O-ring contacts one of the tube members and abuts the clamping device. By providing that the O-ring is interposed between respective end portions of the tubes to be joined, a greater efficiency in providing a leak-tight seal is provided. After the upset 22 contacts the O-ring 40 on the circumferential flange 28, the clamping body 18 is rotated until the tube receiving slots 42 engage the male tube members 12. An operator simply rotates the clamping block 18 to achieve such contact. By simply holding the clamping block 18 in that position, an operator need only to tighten fastener 20 using a standard air impact wrench or socket driver to complete the connection of the male tube members to the female tube members. By utilising the tube coupling block 10 of the present invention, no special assembly tools are required to connect or disconnect the tube members. Furthermore, as stated above, the clamping body 18 is secured to the main body 16 prior to the connection of the male tube members to the female tube members and in doing so minimises the number of loose pieces that an operator needs to handle to connect the tubes. This increases the efficiency of the system and reduces the amount of time and energy needed for an operator to connect the tubes.

Various modifications and permutations of the present invention will, no doubt, occur to those skilled in the art. For example, the clamping block of the present invention is not limited to an S-shaped body but could take any of a number of configurations, such as triangular, to connect more than a pair of tube members together. A triangular block, for example, could connect 3 male tube members to 3 female tube members. Furthermore, the tube coupling block of the present invention can be fabricated from a variety of materials ranging from aluminium alloys, steel alloys and synthetic polymeric materials such as ABS and nylons, as well as any other material generally known in the art.

## Claims

1. A tube coupling apparatus for joining together a plurality of tube members, comprising:
a plurality of male tube members (12), each male tube member (12) having a circumferential upset (22) spaced from a pilot end (24) thereof;
a plurality of female tube members (14) having a first end (26) with a circumferential flange (28) there around for receiving said pilot end (24) of said male tube members (12) therein;
a plurality of O-rings (40), each O-ring (40) being interposed between a respective upset (22) of said male tube member (12) and a flange of said female tube member (14);
a main body (16) having a plurality of bores (38) each having a seat area (36) of predetermined shape for receiving the first end of said female tube members (14) therein, the circumferential flange (28) of said female tube member being configured to contact an exterior surface of said main body at said seat area (36);
a generally planar second body (18) releasably secured to said main body and having a plurality of tube receiving slots (42) therein, each slot being configured to fit over said circumferential upset (22) of a respective male tube member (12) upon rotation of said second body relative to said main body; and
a fastener (20) for securing said second body (18) to said main body (16).

2. A tube coupling apparatus according to Claim 1, wherein said seat area of each of said bores of said main body includes a pair of spaced-apart shoulders.

3. A tube coupling apparatus according to Claim 2, wherein said first end of said female tube members includes a pair of spaced-apart step portions configured to engage said pair of shoulders of said seat area.

4. A tube coupling apparatus according to Claim 3, wherein said first end of said female tube members is staked into said seat area of said bores to prevent withdrawal therefrom.

5. A tube coupling apparatus according to Claim 1, wherein said second body is generally S-shaped and said tube receiving slots open on opposite edges thereof.

6. A tube coupling apparatus for joining together a plurality of tube members, comprising:
a pair of male tube members, each male tube member having a circumferential upset spaced from a pilot end thereof;
a pair of female tube members having a first end including a pair of spaced-apart step portions and a circumferential flange there around for receiving said pilot end of said male tube members therein;
a pair of O-rings, each O-ring being interposed between a respective upset of said male tube member and a flange of said female tube member;
a main body having a plurality of bores each having a seat area including a pair of spaced-apart shoulders configured to engage said pair of step portions of said female tube members therein, the circumferential flange of said female tube member being configured to contact an exterior surface of said main body at said seat area;
a generally S-shaped second body releasably and rotatably secured to said main body and having a pair of tube receiving slots therein, each slot being configured to fit over said circumferential upset of a respective male tube member upon rotation of said second body relative to said main body; and
a fastener for securing said second body to said main body.
